Europäisches Patentamt

European Patent Office

Office européen des brevets

(19)

(11) Veröffentlichungsnummer: **0 258 227**
**B1**

(12) **EUROPÄISCHE PATENTSCHRIFT**

(45) Veröffentlichungstag der Patentschrift: 20.06.90

(21) Anmeldenummer: 86901816.8

(22) Anmeldetag: 22.03.86

(86) Internationale Anmeldenummer:
PCT/DE86/00125

(87) Internationale Veröffentlichungsnummer:
WO 86/06303 06.11.86 Gazette 86/24

(51) Int. Cl.⁵: **B 07 C 3/12**, G 06 K 19/06,
G 05 B 19/12

(54) STEUERSYSTEM FÜR MOBILE TRANSPORTEINHEITEN AUF TRANSPORTSTRASSEN.

(30) Priorität: 02.05.85 DE 3515698

(43) Veröffentlichungstag der Anmeldung:
09.03.88 Patentblatt 88/10

(45) Bekanntmachung des Hinweises auf die
Patenterteilung:
20.06.90 Patentblatt 90/25

(84) Benannte Vertragsstaaten:
CH DE FR GB IT LI

(56) Entgegenhaltungen:
EP-A-0 088 591
EP-A-0 103 730
WO-A-85/00454
DE-A-3 331 694
US-A-3 750 167

(73) Patentinhaber: ROBERT BOSCH GMBH
Postfach 50
D-7000 Stuttgart 1 (DE)

(72) Erfinder: HESSER, Paul
Katharinenstrasse 9
D-7149 Freiberg/N (DE)

## Beschreibung

### Stand der Technik

Die Erfindung geht aus von einem Steuersystem für mobile Transporteinheiten auf einer Transportstraße nach der Gattung des Hauptanspruchs. Aus der EP-A3 0 088 591 ist ein Speicher bekannt, der auf einer zu bestückenden Leiterplatte angeordnet ist. An verschiedenen Stationen des Weges der Leiterplatte, beispielsweise an Bestückungsautomaten, wird eine Verbindung zu den Anschlüssen des Speichers hergestellt und im Speicher enthaltene Information, die beispielsweise am Eingang einer Transportstraße angeordnet ist, ausgelesen und gegebenenfalls eine Information in den Speicher eingeschrieben. An jeder Feststation, an der die Leiterplatte anhält, ist eine umfangreiche Datenverarbeitung erforderlich. Es wird festgelegt, an welche Stationen die Leiterplatte weiterzugeben ist oder ob beispielsweise ein erfolgter Bearbeitungsvorgang nicht erfolgreich abgeschlossen wurde und demzufolge wiederholt werden muß. Zur Bewältigung dieser Datenverarbeitung ist an jeder Feststation ein Rechner nötig, der häufig durch einen zentralen Rechner unterstützt wird, der auch das Zusammenwirken der den Feststationen zugeordneten Rechnern koordiniert. Hier ist ein hoher Verdrahtungsaufwand unvermeidlich. Eine Entscheidung darüber, welche nächste Maßnahme ergriffen werden soll, ist nicht möglich, da dem mobilen Teil lediglich ein Speicherelement ohne Entscheidungslogik zugeordnet ist.

Ferner ist aus der EP-A 0 103 730 ein Kodiersystem zur Erfassung von Informationen an Werkstückträgern und dergleichen bekannt. Das bekannte Kodiersystem weist einen mobilen Informationsträger auf, der an Feststationen berührungslos einen Datenaustausch vornimmt. Der Informationsträger enthält sowohl Festwertspeicher als auch Schreib-Lese-Speicher sowie eine Recheneinheit, welche die Datenübertragung sowie die Speicherverwaltung abwickelt und verwaltet. Eine Ablaufsteuerung ist in dem mobilen Informationsträger nicht vorgesehen. Zur Steuerung des Gesamtsystems ist eine Leitsteuerung sowie ein Zentralprozessor vorgesehen. Sobald ein mobiler Informationsträger an eine Feststation kommt, wird die in ihm gespeicherte Information ausgelesen, das am Informationsträger befestigte, zu bearbeitende Werkstück identifiziert und anschließend, gegebenenfalls nach einer Bearbeitung des Werkstücks, eine neue Information über den nächsten Fertigungsschritt in den Informationsträger eingeschrieben. Über diese Information verfügt der Informationsträger ohne die Eingabe nicht und er kann sich diese Information auch nicht selbst ermitteln.

Aus der DE-A 33 31 694 ist ein Kodiersystem zum Erfassen von Werkstücken auf Transferstraßen bekannt. Auch hier ist ein mobiler Datenträger vorgesehen, der berührungslos mit verschiedenen Feststationen zusammenwirkt. Dieser Datenträger verfügt über einen eigenen Rechner, der jedoch kein Ablaufprogramm enthält. Aufgrund der von der als Lesestation ausgebildeten Teststation empfangenen Daten wird das Werkstück auf kürzestem Wege der nächsten Bearbeitungsstufe zugeführt oder die weitere Verarbeitung des Werkstücks wird über eine mit der Lesestation verbundenen zentralen Datenverarbeitung gesteuert. Somit ist entweder an jeder Feststation ein seperater Rechner oder zumindest ein zentraler Leitrechner mit großem Verkabelungsaufwand erforderlich.

Die bekannten Vorrichtungen weisen den Nachteil auf, daß für die zentrale Leitstelle, für die gesamte Datenverwaltung sowie für die Steuerung und Überwachung der verschiedenen Werkstücke und der einzelnen Fertigungs- und Abzweigestationen ein großer Aufwand erforderlich ist. Sind mehrere Werkstückträger auf der Fertigungsstraße im Umlauf, können gleichzeitig verschiedene mobile Steuermodule an verschiedenen Lesestationen ankommen, so daß der Informationsaustausch und die Verarbeitung der Informationen mit der zentralen Leitstelle zu Zeitproblemen führt. Außerdem kann der Ablauf der Fertigung beispielsweise durch Herausnehmen eines Werkstückträgers aus der Fertigungsstraße an einer Stelle und durch Wiedereinsetzen an einer anderen Stelle gestört werden, da die in der zentralen Leitstelle registrierte Position des Werkstückträgers dann nicht mehr mit der tatsächlichen Position übereinstimmt. Die Änderungen müssen dann durch einen manuellen Eingriff in die zentrale Leitstelle korrigiert werden.

Mit der vorliegenden Lösung wird angestrebt, durch eine Dezentralisierung der Intelligenz des gesamten Steuersystem den Ablauf verschiedener Bearbeitungsfolgen, Stationsfolgen, Zielvorgaben der verschiedenen Transporteinheiten für eine universelle Anwendung möglichst einfach, flexibel, schnell und zuverlässig zu gestalten.

### Vorteile der Erfindung

Die erfindungsgemäße Lösung mit den kennzeichnenden Merkmalen des Hauptanspruchs hat den Vorteil, daß die Transporteinheiten mit der in ihrem mobilen Steuermodul vorhandenen intelligenten Steuerlogik im Dialog mit den ortsfesten Steuermodulen an der Transportstraße sich ihren Weg selbst suchen können, der dem Ablaufprogramm im jeweiligen mobilen Steuermodul entspricht. Eine zentrale Leitstelle zur Verarbeitung aller Informationen und zur Steuerung der einzelnen Stationen an der Transportstraße wird nicht mehr benötigt. Die jeweiligen Steuerbefehle werden unmittelbar von den Transporteinheiten auf die nacheinander durchlaufenen Stationen der Transportstraße gegeben. Mit diesem Steuerungssystem ist es insbesondere bei umfangreichen Fertigungsanlagen und bei automatisch umrüstbaren Fertigungsstationen möglich, die Steuerungsvorgänge zu vereinfachen und flexibler zu gestalten. Die mobilen Steuermodule übernehmen dabei eine aktive Rolle, indem jedes mobile Steuermodul einer Transporteinheit im Dialog mit den ortsfesten Steuermodulen an der Transportstraße in Form einer Information das jeweils nächste Ziel angibt. Die zur Informationsübertragung erforderliche Energie wird dabei bevorzugt in an sich bekannter Weise berührungslos von den ortsfesten Steuermodulen auf das vorbeilaufende mobile Steuermodul übertragen und dadurch zugleich die Ausgabe der aktuellen Zielinformation am mobilen Steuermodul ausgelöst. Dabei ist es auch möglich, durch die Übertragung der jeweiligen Zielinformation auch noch Befehle zur Umrüstung über den ortsfesten Steuermodul an die nächste Bearbeitungsstation zu geben. Auf diese Weise können verschiedene Fertigungsabläufe individuell für jedes Werkstück durch entsprechende Ablaufprogramme in den mobilen Steuermodulen der Transporteinheiten in beliebiger Folge programmiert werden. Durch einen kleinen Mikrorechner in den mobilen Steuermodulen und einer begrenzten Logik in den ortsfesten Steuermodulen ist es möglich, diese Module mit geringen Kosten und hoher Betriebssicherheit herzustellen.

Durch die in den Unteransprüchen aufgeführten Maßnahmen sind vorteilhafte Weiterbildungen und Verbesserungen der im Hauptanspruch angegebenen Merkmale möglich. Eine besonders vorteilhafte Steuerung ergibt sich, wenn an der von einer Transporteinheit angelaufenen Station nur dann ein Arbeitsgang ausgelöst wird, wenn die vom mobilen Steuermodul der Transporteinheit abgegebene Information mit einer der Station zugeordneten Festinformation für die Auslösung eines Arbeitsbefehls übereinstimmt. Dabei wird jeder Bearbeitungsvorgang durch eine bestimmte Festinformation, z.B. durch eine Kennzahl kodiert. Die Festinformationen werden z.B. über hexadezimalkodierte Mikroschalter solchen ortsfesten Steuermodulen bzw. den ihr zugeordneten Stationen aufgeprägt, welche die entsprechenden Arbeitsvorgänge erledigen können. Auf diese Weise wird die von einer Transporteinheit angelaufene Station nur dann aktiviert, wenn sie in der Lage ist, den vom mobilen Steuermodul ausgegebenen Schritt des Ablaufprogramms, z.B. einen bestimmten Bearbeitungsvorgang am Werkstück der Transporteinheit auszuführen. Dagegen durchläuft die Transporteinheit eine Station ohne Auslösung eines Arbeitsvorganges immer dann, wenn die vom mobilen Steuermodul abgegebene Information mit den von der Station durchzuführenden Arbeitsvorgängen nicht übereinstimmt.

Zur Vereinheitlichung der ortsfesten sowie der mobilen Steuermodule und zur Erhöhung der Flexibilität des gesamten Steuersystems ist es vorteilhaft, wenn die ortsfesten Steuermodule und die mobilen Steuermodule jeweils mit einer Sende- und Empfangseinheit ausgerüstet sind, über die der Dialog stattfindet und mit denen die Stationen nach Abschluß eines Arbeitsvorganges eine Quittungsinformation über einen ihr zugeordneten ortsfesten Steuermodul an den mobilen Steuermodul der an dieser Station befindlichen Transporteinheit übertragen. Diese Quittungsinformation gibt an, daß ein bestimmter Schritt des im mobilen Steuermodul gespeicherten Ablaufprogramms durchlaufen ist. Die Quittungsinformationen werden im mobilen Steuermodul gespeichert und geben bei Abfrage eine Auskunft über die bereits durchlaufenen Schritte des gesamten Ablaufprogramms sowie deren Ablauffolge. Die Quittungsinformation kann in vorteilhafter Weise außerdem dafür benutzt werden, das im mobilen Steuermodul abgelegte Ablaufprogramm um einen Schritt weiterzuschalten und die Information für die nächste Zielvorgabe bzw. für den nächsten Schritt des Ablaufprogramms aufzurufen.

Bei Anwendung des erfindungsgemäßen Steuersystems in Fertigungsstraßen sind die Stationen beispielsweise als Verzweigungs-, Bearbeitungs- und/oder Meßstationen ausgebildet und die Transporteinheiten bestehen beispielsweise aus einem Werkstückträger mit einem zu bearbeitenden Werkstück, das sich auf der Transportstraße in einer vorgegebenen Richtung von einer Station zur nächsten bewegt.

Zeichnung

Ausführungsbeispiele der Erfindung sind in der Zeichnung dargestellt und in der nachfolgenden Beschreibung näher erläutert. Figur 1 zeigt das Schema einer Transportstraße mit einem erfindungsgemäßen Steuersystem zur Bearbeitung verschiedener Werkstücke mit Hilfe verschiedener Arbeitsabläufe mit den erforderlichen Verzweigungs-, Bearbeitungs- und Meßstationen, Figur 2 zeigt das Blockschaltbild eines ortsfesten Steuermoduls, Figur 3 zeigt das Blockschaltbild eines mobilen Steuermoduls, Figur 4 zeigt mehrere Ablaufprogramme, von denen in jeden mobilen Steuermodul ein ausgewähltes Programm eingegeben wird, Figur 5 zeigt eine Koinzidenz-Schaltung für Ansteuerung einer Verzweigungsstation, Figur 6 zeigt ein Ablaufdiagramm für die an einer einfachen Bearbeitungsstation auftretenden Vorgänge, Figur 7 zeigt ein Ablaufdiagramm für die Vorgänge, die an einer Bearbeitungsstation mit mehreren Arbeitsprogrammen auftreten, Figur 8 zeigt eine Meßstation an der Transportstraße und Figur 9 zeigt ein Flußdiagramm zur Auswertung eines an der Meßstation gemessenen Wertes. Figur 10 zeigt eine Prüfstation für das gespeicherte Ablaufprogramm einer Transporteinheit. Figur 11 zeigt als weiteres Ausführungsbeispiel eine Transporteinheit mit einem Materialbehälter beim Passieren einer Nachfüllstation und Figur 12 zeigt das Flußdiagramm des mobilen Steuermoduls zur Überwachung des Behälterinhaltes.

Beschreibung der Ausführungsbeispiele

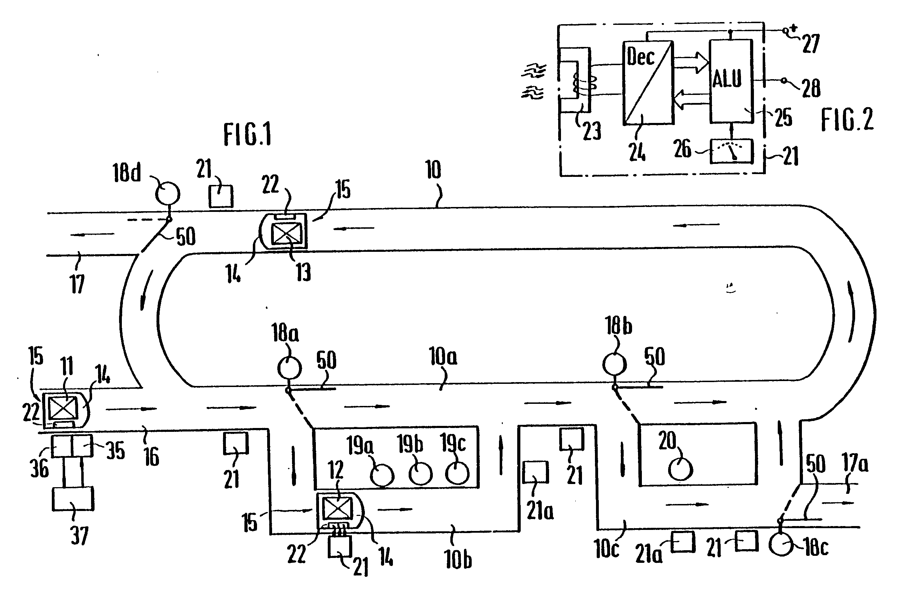

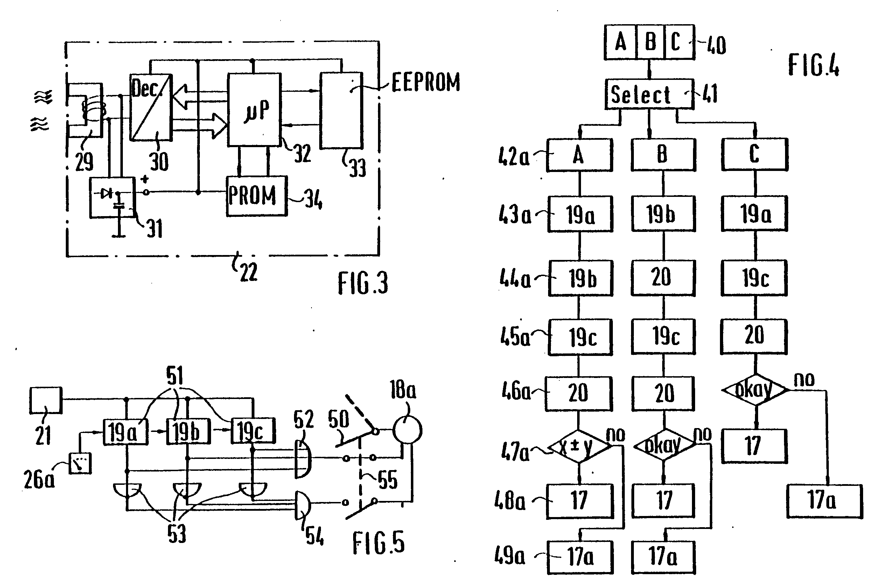

Zur Beschreibung des erfindungsgemäßen Steuersystems ist in Figur 1 die Transportstraße einer Fertigung verschiedener Erzeugnisse mit 10 bezeichnet. Die Produkte bestehen aus Werkstücken 11, 12, 13, welche jeweils auf einem Werkstückträger 14 montiert sind. Werkstückträger und Werkstück bilden jeweils Transporteinheiten 15, die auf der Transportstraße 10 in Richtung der Pfeile bewegt werden. Die Transportstraße 10 besteht aus einer in sich geschlossenen Hauptschleife 10a mit Nebenschleifen 10b, 10c, mit einem Einlauf 16 für die Werkstückträger 14 mit neuen, unbearbeiteten Werkstücken, mit einem Auslauf 17 für erkstückträger 14 mit fertig bearbeiteten Werkstücken und mit einem weiteren Auslauf 17a für Werkstückträger 14 mit fehlerhaften bzw. fehlerhaft bearbeiteten Werkstücken. Auf der Transportstraße 10 sind mehrere Stationen angeordnet, die sich unterscheiden in Verzweigungsstationen 18, Bearbeitungsstationen 19 und einer Meßstation 20. Jeder Station ist ein ortsfester Steuermodul 21 zugeordnet, der an einer Seite der Transportstraße 10 in Höhe der zugehörigen Station bzw. kurz davor montiert ist. An jedem Werkstückträger 14 sitzt in gleicher Höhe ein mobiler Steuermodul 22, der mit dem Werkstückträger 14 in Pfeilrichtung dicht an den ortsfesten Steuermodulen 21 vorbeibewegt wird.

Das in Figur 2 dargestellte Blockschaltbild eines ortsfesten Steuermoduls 21 enthält einen Hochfrequenzwandler 23 mit einer daran angeschlossenen Dekodierstufe 24, einer Steuerlogik 25, die auch als Mikrorechner ausgeführt sein kann, sowie eine Eingabe 26 von Festinformationen. Der ortsfeste Steuermodul 21 hat ferner eine Stromversorgung 27 und einen Steueranschluß 28, über den der ortsfeste Steuermodul 21 mit der ihm zugeordneten Station zum Austausch von Informationen und Befehlen anzuschließen ist. Der ortsfeste Steuermodul 21 bildet eine Sende- und Empfangseinheit, welche über den Wandler 23 mit den mobilen Steuermodulen 22 einen Dialog aufnehmen kann. Die hochfrequente Informationsübertragung ist dabei durch wellenförmige Pfeile angedeutet.

Das in Figur 3 dargestellte Blockschaltbild eines mobilen Steuermoduls 22 enthält ebenfalls einen HF-Wandler 29, auf den die HF-Schwingung eines ortsfesten Steuermoduls 21 eingekoppelt werden kann. An dem HF-Wandler 29 ist eine Dekodierstufe 30 sowie eine Energie-Versorgungsstufe 31 angeschlossen. Ein Mikroprozessor 32 ist zum Austausch von Informationen mit der Dekodierstufe 30, mit einem überschreibbaren Speicher 33 z.B. einem EEPROM und einem Festwertspeicher 34 (PROM) verbunden. Die Energieversorgung der einzelnen Stufen erfolgt beim Vorbeibewegen des mobilen Steuermoduls 22 an einem ortsfesten Steuermodul 21 über die Energie-Versorgungsstufe 31. Im Bedarfsfalle können auch die Speicher 33 und 34 von einer fest eingebauten Knopfzelle versorgt werden. Die Informationsübertragung zwischen den ortsfesten und den mobilen Steuermodulen 21 und 22 kann beispielsweise durch eine Beeinflussung der HF-Schwingung bewirkt werden, wie sie aus der DE-OS 33 31 694 oder aus der DE-OS 32 34 345 bekannt sind.

In dem Steuersystem nach Figur 1 befindet sich am Einlauf 16 der Transportstraße 10 eine ortsfeste Eingabeeinheit 35, und daneben eine ortsfeste Lesestelle 36. Beide sind mit einem Programmwähler 37 verbunden, der in dem hier beschriebenen Ausführungsbeispiel drei unterschiedlichen

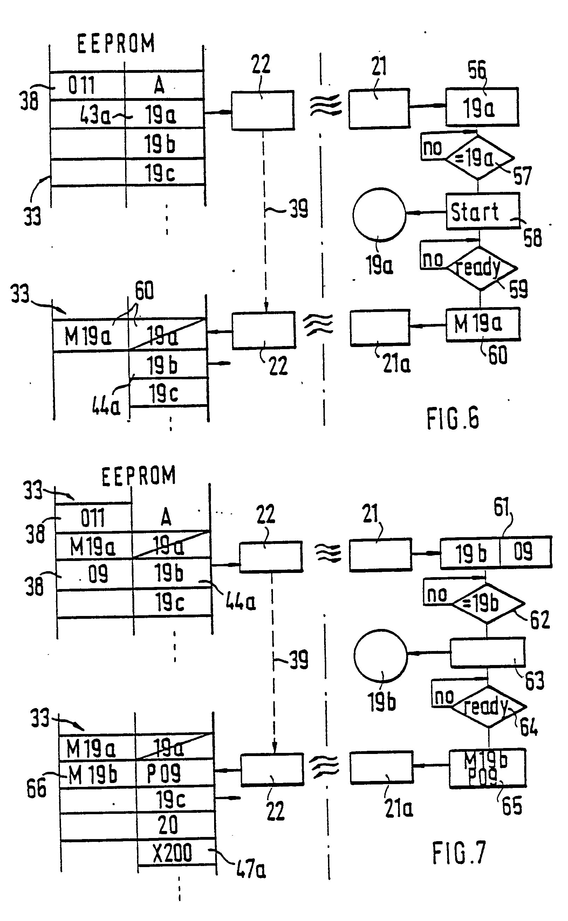

Ablaufprogramme A, B und C enthalten soll. Die drei Ablaufprogramme sind gemäß Figur 4 in einzelne Programmschritte aufgegliedert. Ferner wird im vorliegenden Ausführungsbeispiel festgelegt, daß das Werkstück 11 mit dem Programm A, das Werkstück 12 mit dem Programm B und das Werkstück 13 mit dem Programm C die Transportstraße 10 durchlaufen und an den entsprechenden Stationen in der dort vorgesehenen Weise bearbeitet werden soll. Alle Werkstücke, die nach dem Programm A bearbeitet werden sollen, werden auf einen Werkstückträger 14 gesetzt, der eine optisch erkennbare Kennmarke für das Programm A trägt. In entsprechender Weise werden alle Werkstücke, die nach dem Programm B oder C bearbeitet werden sollen, auf entsprechende Werkstückträger mit den Kennmarken der Programme B bzw. C befestigt. Die Kennmarken bilden Kodeinformationen zur Auswahl des benötigten Ablaufprogramms.

Wie Figur 4 in Verbindung mit Figur 1 zeigt, werden beim Vorbeilaufen der Werkstückträger 14 an der Lesestelle 24 von dieser die Programmkennmarken in einem ersten Schritt 40 gelesen und an den Programmwähler 37 weitergegeben. Die Programmkennmarken können optisch, mechanisch, induktiv oder als binäre Hochfrequenzsignale von der Lesestelle 36 gelesen bzw. aus dem mobilen Steuermodul 22 des Werkstückträgers 14 ausgelesen werden. Im letzteren Fall ist die Programmkennmarke als binäre Information im Festwertspeicher 34 des mobilen Steuermoduls 22 enthalten und es wird durch ein entsprechendes Abfragesignal der Lesestelle 36 aufgerufen.

Im Beispielsfall wird gemäß Figur 4 aus dem mobilen Steuermodul 22 des Werkstückträgers 14 mit dem Werkstück 11 die Programmkennmarke A an der Lesestelle 36 ausgelesen und der Programmwähler 25 wählt im Schritt 41 (Figur 4) aus den vorhandenen Programmen das Ablaufprogramm A aus, um es im nächsten Schritt 42a über die Eingabeeinheit 35 in einer binären Signalfolge auf den mobilen Steuermodul 22 zu übertragen. Dort wird das Ablaufprogramm A und seine Kennmarke (Kennung) im Speicher 33 abgelegt. Außerdem wird über die ortsfeste Eingabeeinheit 35 der mobile Steuermodul 22 mit bestimmten Zusatzinformationen des zu bearbeitenden Werkstücks 11, beispielsweise mit einer Teilnummer oder Typnummer geladen, die ebenfalls in Form einer Binärinformation im Speicher 33 des mobilen Steuermoduls 22 abgelegt wird. Schließlich kann auch der Werkstückträger 14 mit einer Kennzahl versehen sein, die im Speicher 33 des mobilen Steuermoduls 22 als Binärinformation abgelegt ist. Diese neben dem Ablaufprogramm im Speicher 33 gespeicherten Zusatzinformationen dienen als Kennung der jeweiligen Transporteinheit bzw. eines jeden Werkstücks, das sich auf der Transportstraße 10 befindet. In Figur 6 und 7 wurde beispielsweise als Zusatzinformation 38 neben dem Ablaufprogramm A die Teilnummer 011 des Werkstücks 11 von der Eingabeeinheit 35 mit eingegeben. Die Eingabeeinheit 35 kann ggf.

auch noch mit einer Prüfeinheit ausgerüstet sein, mit der das eingegebene Ablaufprogramm nochmals aus dem mobilen Steuermodul 22 abgerufen wird, um es auf Richtigkeit und Vollständigkeit durch Vergleich mit dem ausgewählten Ablaufprogramm zu überprüfen.

Das Flußdiagramm nach Figur 4 zeigt die Gliederung der drei verschiedenen Ablaufprogramme A, B und C. Im Ablaufprogramm A soll das Werkstück 11 in Figur 1 zunächst die Bearbeitungsstation 19a, danach die Bearbeitungsstation 19b, dann die Bearbeitungsstation 19c und schließlich noch die Meßstation 20 anlaufen, ehe es dann die Fertigungsstraße 10 an dem Auslauf 17 oder 17a endgültig verläßt. Das Werkstück 12 ist dagegen nach dem Ablaufprogramm B zu bearbeiten, indem es zunächst die Bearbeitungsstation 19b, dann die Meßstation 20, danach die Bearbeitungsstation 19c und schließlich nochmals die Meßstation 20 anläuft, ehe es anschließend über den Auslauf 17, 17a die Fertigungsstraße verläßt. Das Werkstück 13 soll nach dem Ablaufprogramm C bearbeitet werden. Es muß zunächst die Bearbeitungsstation 19a, dann die Bearbeitungsstation 19c und anschließend die Meßstation 20 anlaufen, ehe es die Fertigungsstraße 10 über den Auslauf 17 bzw. 17a verläßt.

Im folgenden soll nun der Weg des Werkstücks 11 auf der Fertigungsstraße 10 verfolgt weden, dessen mobiler Steuermodul 22 mit dem Ablaufprogramm A an der Eingabeeinheit 35 geladen wurde. Der Werkstückträger 14 mit dem Werkstück 11 bewegt sich dabei zunächst in Pfeilrichtung auf den nächsten ortsfesten Steuermodul 21 zu und wird beim Erreichen von diesem durch eine HF-Schwingung aktiviert.

Dadurch wird vom gespeicherten Ablaufprogramm A der erste Programmschritt 43a (Figur 4) aufgerufen, der in Form einer binären Information vom mobilen Steuermodul 22 an den ortsfesten Steuermodul 21 übertragen wird. Die binäre Information enthält die Kennzahl der Bearbeitungsstation 19a, die als Zielvorgabe zunächst anzusteuern ist. An der Station 19a ist nur ein bestimmter Bearbeitungsvorgang bzw. eine bestimmte Bearbeitungsfolge am Werkstück 11 durchzuführen. Die Kennzahl der Station 19a ist daher zugleich die Kennzahl für die dort durchzuführende Bearbeitung des Werkstücks 11.

Im Ausführungsbeispiel ist der erste ortsfeste Steuermodul 21, dem die Transporteinheit 15 mit dem Werkstück 11 ansteuert, der Verzweiguhgsstation 18a zugeordnet, deren Weiche 50 in der dargestellten Position die Transporteinheiten 15 in Pfeilrichtung passieren läßt. Die Weiche 50 wird jedoch durch einen Arbeitsvorgang an der Verzweigungsstation 18a in die gestrichelt dargestellte Position geschwenkt, sobald diese einen entsprechenden Arbeitsbefehl erhält. Durch einen zweiten Arbeitsbefehl kann danach die Weiche 50 wieder in ihrer Ausgangsstellung zurückgeschwenkt werden. Zur Auslösung der Weichenumschaltung werden z.B. der Verzweigungsstation 18a zwei Gruppen von Stationskennzahlen aufgeprägt, die mit jeder Weichenumschaltung alternierend aktiviert werden. In der dargestellten Weichenstellung muß eine Umschaltung der Weiche 50 dann erfolgen, wenn die vom mobilen Steuermodul 22 des Werkstückträgers 14 an den ortsfesten Steuermodul 21 übertragene Zielvorgabe die Kennzahl einer der Bearbeitungsstationen 19a, 19b oder 19c in der Nebenschleife 10b ist. Die erste Gruppe umfaßt somit alle Stationskennzahlen der in der Schleife 10b liegenden Stationen. Für die zweite Gruppe können die Kennzahlen aller anderen Stationen eingegeben werden.

Figur 5 zeigt eine Koinzidenzschaltung, bei der im einfachsten Fall die erste Gruppe von Stationskennzahlen durch drei Koinzidenzstufen 51 realisiert sind, denen über eine Eingabe von Festinformationen die Kennzahlen der Bearbeitungsstationen 19a, 19b und 19c aufgeprägt sind. Die Festinformationen werden dabei über hexadezimalcodierte Mikroschalter 26a von Hand eingestellt. Die Ausgänge der Koinzidenzstufen 51 sind auf ein ODER-Gatter 52 zusammengeführt. Anstelle einer zweiten Gruppe von Koinzidenzstufen sind hier die Ausgänge der Koinzidenzstufen 51 über Inverter 53 einem UND-Gatter 54 zugeführt Über einen Umschalter 55 wird in Abhängigkeit von der Weichenstellung der Ausgang des ODER-Gatters 52 bzw. des UND-Gatters 54 auf die erzweigungsstation 18a durchgeschaltet. Die Gatter 52 und 54 bilden dabei Ausgangstufen, über welche jeweils die dort ausgelösten Arbeitsbefehle auf die angeschlossene Station 18a gelangen. Gemäß Figur 5 ist die Koinzidenzschaltung jeweils an der ihr zugeordneten Station 18a angeordnet und durch die Mikroschalter 26a programmierbar. Es ist aber ebenso möglich, daß die Koinzidenzschaltung jeweils im ortsfesten Steuermodul 21 gemäß Figur 2 enthalten ist, wobei dann über den Steueranschluß 28 als Ausgang bestimmte Arbeitsbefehle unmittelbar an die ihm zugeordnete Station abgegeben werden.

Im vorliegenden Beispielsfall ist nun die vom mobilen Steuermodul 22 für das Werkstück 11 an den ortsfesten Steuermodul 21 der Abzweigstation 18a im Programmschritt 43a abgegebene Information die Kennzahl der Bearbeitungsstation 19a. Diese Kennzahl stimmt mit der ersten der drei Stationskennzahlen überein, die der ersten Koinzidenzstufe 51 der Koinzidenzschaltung nach Figur 3 aufgeprägt ist. Folglich erhält die Verzweigungsstation 18a über den Ausgang der ersten Koinzidenzstufe 51 und das ODER-Gatter 52 einen Arbeitsbefehl, durch den die Weiche 50 in die gestrichelte Position umschwenkt. Der Werkstückträger 14 bewegt sich nun in die Nebenschleife 10b und gelangt dort schließlich zum nächsten orstfesten Steuermodul 21. Da er die Bearbeitungsstation 19a noch nicht durchlaufen hat, wird weiterhin die gleiche Information an den ortsfesten Steuermodul 21 übertragen und von dort auf die Bearbeitungsstationen 19a, 19b und 19c weitergeleitet.

Figur 6 zeigt in einem Ablaufdiagramm die verschiedenen Vorgänge, die beim Durchlauf des Werkstückträgers 14 mit dem Werkstück 11 an der Bearbeitungsstation 19a auftreten. Zunächst wird von dem im Speicher 33 des mobilen Steuermoduls 22 abgelegten Ablaufprogramms A im ersten Programmschritt 43a als Information die Zielangabe 19a auf den ortsfesten Steuermodul 21 übertragen. Diese wird am ortsfesten Steuermodul 21 im Schritt 56 zunächst dekodiert, im nachfolgenden Schritt 57 auf Koinzidenz mit der Kennzahl 19a als Festinformation der Station 19a überprüft und im Falle der Koinzidenz wird im Schritt 58 durch einen Steuerbefehl ein Arbeitsvorgang bzw. eine Arbeitsfolge an der Bearbeitungsstation 19a ausgelöst, sofern diese Station frei ist. Damit wird der Werkstückträger 14 an der Station 19a angehalten und das Werkstück 11 wird nach dem jeweiligen Maschinenprogramm bearbeitet. Danach wird das Werkstück 11 mit dem Werkstückträger 14 wieder freigegeben und es bewegt sich innerhalb der Nebenschleife 10b in Pfeilrichtung weiter. Im Schritt 59 wird dabei die Beendigung des Arbeitsvorganges an der Station 19a erfaßt und im Schritt 60 wird nun eine Quittungsinformation am nächsten ortsfesten Steuermodul 21a freigegeben. Die Quittungsinformation besteht hier aus der Maschinenkennzahl M19a, Sobald nun der in Richtung des Pfeiles 39 bewegte mobile Steuermodul 22 den ortsfesten Steuermodul 21a erreicht, wird diese Quittungsinformation auf ihn übertragen. Sie wird im Schritt 60 neben dem Ablaufprogramm A im Speicher 33 des mobilen Steuermoduls 22 abgelegt. Mit dieser Quittungsinformation wird im Beispielsfall gleichzeitig der durchlaufene Schritt 19a des Ablaufprogramms A gelöscht und der nächste Schritt 44a des Ablaufprogramms A aufgerufen. Dieser enhält als Information nunmehr die Kennzahl 19b der Bearbeitungsstation 19b als nächste Zielvorgabe. Um Speicherplätze im Speicher 33 zu sparen, kann anstelle der Löschung des durchlaufenen Abschnitts 19a des Ablaufprogramms A diese auch mit der Quittungsinformation überschrieben werden.

Im weiteren Verlauf gelangt nun der Werkstückträger 14 mit dem Werkstück 11 zum nächsten ortsfesten Steuermodul 21, welcher der Verzweigungsstation 18b zugeordnet ist. Zur Umsteuerung der Weiche dieser Verzweigungsstation 18b ist ihr die Kennzahl der Meßstation 20 in der Nebenschleife 10c aufgeprägt. Da jedoch die vom mobilen Steuermodul 22 des Werkstücks 11 ausgegebene Information die Kennzahl der Bearbeitungsstation 19b enthält, stimmt diese mit der aufgeprägten Kennzahl der Verzweigungsstation 18b nicht überein. Folglich wird die Weiche 50 nicht umgeschaltet und der Werkstückträger 14 durchläuft die Verzweigungsstation 18b ohne Auslösung eines Arbeits- bzw. Umschaltbefehls. Er läuft nun im Zuge der Hauptschleife 10a der Transportstraße 10 zum nächsten ortsfesten Steuermodul 21, welcher der Verzweigungsstation 18d zugeordnet ist. Dieser Station ist in der dargestellten position der Weiche 50 die Kennzahl des Auslaufs 17 aufgeprägt. Da sie mit der vom mobilen Steuermodul 22 abgegebenen Information ebenfalls nicht übereinstimmt, wird die Weiche 50 nicht umgesteuert und der Werkstückträger 14 gelangt nun wieder zur Verzweigungsstation 18a. Falls diese nicht in der Zwischenzeit durch andere mobile Steuermodule 22 wieder umgeschaltet worden ist, befindet sich die Weiche 50 hier noch in ihrer gestrichelten Position. Da der mobile Steuermodul 22 mit dem Werkstück 11 im Schritt 44a des Ablaufprogramms A weiterhin die Kennzahl der Bearbeitungsstation 19b an den ortsfesten Steuermodul 21 ausgibt, sind die UND-Bedingungen am Gatter 54 (Figur 5) nicht erfüllt und die Weiche 50 wird folglich nicht umgesteuert. Der Werkstückträger 14 mit dem Werkstück 11 gelangt jetzt erneut in die Nebenschleife 10b der Transportstraße 10. Über den nächsten ortsfesten Steuermodul 21 wird nun die Bearbeitungsstation 19b aktiviert.

Figur 7 zeigt ein Ablaufdiagramm für die an der Station 19b auftretenden Vorgänge. Die Bearbeitungsstation 19b kann mehrere Bearbeitungsprogramme bzw. verschiedene einzelne Bearbeitungsvorgänge durchführen. Die einzelnen Arbeitsvorgänge bzw. Arbeitsprogramme in der gesamten Anlage haben fest vorgegebene Programmkennzahlen. Neben dem Ablaufprogramm A im Speicher 33 des mobilen Steuermoduls 22 wird als weitere Zusatzinformation 38 die Kennzahl des jeweils gewünschten Bearbeitungsprogramms an der Eingabeeinheit 35 mit eingegeben. Im Beispielsfall soll an der Station 19b das Bearbeitungsprogramm mit der Kennzahl 09 durchgeführt werden. Sobald nun der mobile Steuermodul 22 im Schritt 44a des Ablaufprogramms A als Information die Stationskennzahl 9b an den ortsfesten Steuermodul 21 ausgibt, wird gleichzeitig noch die Kennzahl 09 für das gewünschte Bearbeitungsprogramm mit ausgegeben. Im Schritt 61 werden beide Kennzahlen vom ortsfesten Steuermodul 21 erfaßt und im Schritt 62 wird die Kennzahl 19b auf Koinzidenz mit der eingeprägten Stationskennzahl für die Station 19b überprüft. Im Schritt 63 wird nun an der Station 19b das Bearbeitungsprogramm 09 aufgerufen. Die Station wird gegebenenfalls entsprechend umgerüstet und das Werkstück 11 wird nunmehr nach dem aufgerufenen Programm 09 bearbeitet. Im Schritt 64 wird die Beendigung des Bearbeitungsprogramms 09 festgestellt und im Schritt 65 wird eine Quittungsinformation an den nachfolgenden ortsfesten Steuermodul 21a abgegeben. Nach der Bearbeitung des Werkstücks 11 wird dieses von der Station 19b wieder freigegeben und der mobile Steuermodul 22 des Werkstückträgers 14 gelangt nun in Richtung des Pfeiles 39 zum ortsfesten Steuermodul 21a, wo nunmehr die Quittungsinformation aufgenommen wird. Die Quittungsinformation enthält hier nicht nur die Maschinenkennzahl M19b sondern daneben auch noch die Programmkennzahl P09. Im Schritt 66 werden nun beide Kennzahlen in den Speicher 33 des mobilen Steuermoduls 22 abgelegt, wobei der durchlaufene Schritt 19b des Ablaufprogrammes A mit der Kennzahl des Arbeitsprogramms P09 überschrieben wird. Außerdem wird damit das Ablaufprogramm A für das Werkstück 11 erneut um einen Schritt weitergeschaltet.

Da im nächsten Schritt 45a des Ablaufprogramms A (Figur 4) als Information die Kennzahl der Bearbeitungsstation 19c vom mobilen Steuermodul 22 des Werkstücks 11 an den nachfolgenden ortsfesten Steuermodulen 21 übertragen wird, bewegt sich der Werkstückträger 14 mit dem Werkstück 11 nunmehr erneut durch die Hauptschleife 10a der Transportstraße 10. Vorbei an den Verzweigungsstationen 18b, 18d und 18a gelangt er schließlich zur Bearbeitungsstation 19c. Dort wird das Werkstück 11 in gleicher Weise, wie in Figur 6 oder Figur 7 näher erläutert, weiter bearbeitet und anschließend wird das Ablaufprogramm A mit einer weiteren Quittungsinformation auf den nächsten Schritt 46a weitergeschaltet. Damit wird an dem ortsfesten Steuermodul 21 für die Verzweigungsstation 18b nunmehr die Kennzahl für die Meßstation 20 vom mobilen Steuermodul 21 des Werkstücks 11 empfangen. Da diese Information mit der der Verzweigungsstation 18b in dieser Weichenstellung aufgeprägten Stationskennzahl übereinstimmt, wird die Weiche 50 in die gestrichelte Position umgeschwenkt und der Werkstückträger 14 mit dem Werkstück 11 gelangt in die Nebenschleife 10c. Beim Erreichen des nächsten ortsfesten Steuermoduls 21 wird mit der vom mobilen Steuermodul 22 abgegebenen Kennzahl die Meßstation 20 aktiviert und das Werkstück 11 wird dort vermessen.

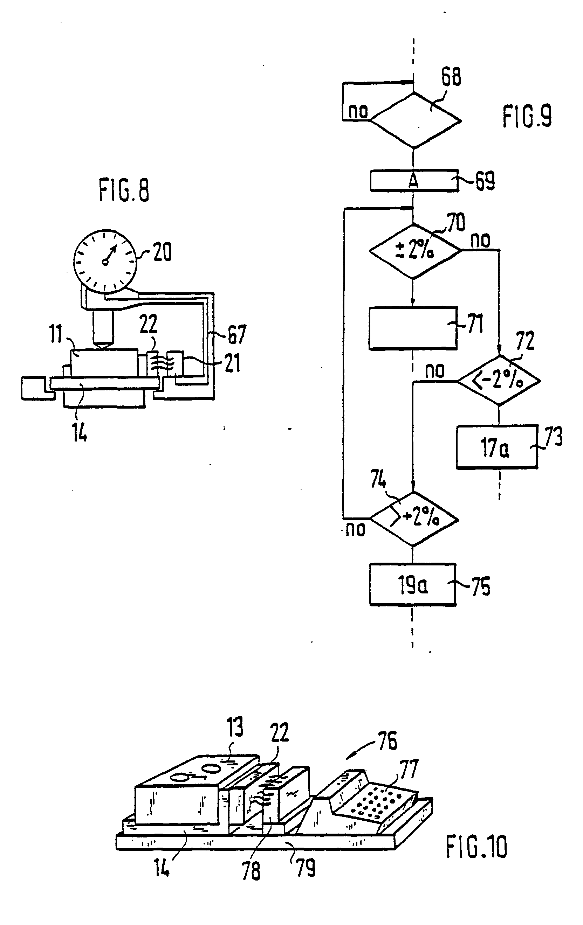

Figur 8 zeigt die Meßstation 20, an der beispielsweise die Höhe des Werkstücks 11 vermessen wird. Über eine elektrische Verbindung 67 wird der gemessene Wert als digitales Signal auf den ortsfesten Steuermodul 21 gegeben und von dort auf den mobilen Steuermodul 22 übertragen.

Figur 9 zeigt in einem Flußdiagramm die Auswertung des an der Meßstation 20 ermittelten Meßwertes durch ein Unterprogramm im mobilen Steuermodul 22. Im Schritt 68 wird zunächst der Eingang des Meßwertes abgewartet. Im Schritt 69 wird der Meßwert zunächst zwischengespeichert und außerdem wird im Ablaufprogramm A die Kennzahl 20 gelöscht. Das Ablaufprogramm A wird damit auf den nächsten Schritt 47a (Figur 4) weitergeschaltet. Aus Figur 7 ist erkennbar, daß im Speicher 33 nach der Kennzahl 20 der Sollwert X200 im Ablaufprogramm A abgelegt ist, der nunmehr im Schritt 47a aufgerufen wird. Im nachfolgenden Schritt 70 des Unterprogramms gemäß Figur 9 wird nun geprüft, ob der Meßwert innerhalb der zulässigen Toleranzen von ± 2 % zum Sollwert X200 liegt. Ist dies der Fall, so wird im Schritt 71 der Meßwert im Speicher 33 neben dem Sollwert abgelegt. Anschließend wird das Ablaufprogramm A im Schritt 48a (Figur 4) fortgesetzt. Liegt der. Meßwert außerhalb der Toleranzgrenzen, so wird im Schritt 72 des Unterprogramms nach Figur 9 festgestellt, ob das Maß kleiner als zulässig ist. Da eine Nachbehandlung in diesem Fall nicht mehr möglich ist, wird im nachfolgenden Schritt 73 als neue Zielvorgabe für das Ablaufprogramm A die Kennzahl 17a des Auslaufes 17a in den Speicher 33 eingegeben, um das Werkstück 11 aus der weiteren Fertigung auszuscheiden. Ist die Toleranzgrenze jedoch nicht unterschritten, so wird im Schritt 74 geprüft, ob der Meßwert größer als zulässig ist. Ist auch dies nicht der Fall, so liegt im Schritt 70 eine Falschmeldung vor und das Programm springt folglich auf den Schritt 70 zurück. Wird jedoch im Schritt 74 ein zu großer Meßwert festgestellt, so wird im nachfolgenden Schritt 75 als nächste Zielvorgabe für das Ablaufprogramm A die Kennzahl der Station 19a oder einer anderen Station in den Speicher 33 eingeschrieben, die eine Nachbearbeitung des Werkstücks 11 vornehmen kann.

Ist eine Nachbearbeitung an Werkstücken nicht mehr möglich so reicht es aus, im Schritt 47a des Ablaufprogramms A gemäß Figur 4 den Meßwert lediglich mit den Sollwerten X und den zulässigen Abweichungen ±Y zu vergleichen, die als Zusatzinformation mit dem Ablaufprogramm A an der Eingabeeinheit 35 in den mobilen Steuermodul 22 eingegeben wurden Liegen die gemessenen Werte außerhalb der zulässigen Toleranzen, so wird das Ablaufprogramm A auf den Schritt 49a mit der Kennzahl des Auslaufs 17a weitergeschaltet, um das Werkstück auszusondern. Fallen dagegen die gemessenen Werte innerhalb der Toleranzbereiche, so wird das Ablaufprogramm A im nächsten Schritt 48a auf die Kennzahl des Auslaufs 17 weitergeschaltet.

In diesem Fall muß die Verzweigungsstation 18c aktiviert werden, um die Weiche 50 in die gestrichelte Position zu schwenken. Um dies möglichst einfach zu erreichen, genügt eine Koinzidenzschaltung gemäß Figur 5 mit nur einer Koinzidenzstufe 51 und nur einem Inverter 53, dessen Eingang und Ausgang auf je einen Kontakt eines Umschalters 55 gelegt ist. Der Koinzidenzstufe 51 der Verzweigungsstation 18c ist lediglich die Kennzahl des Auslaufs 17a als Festinformation aufgeprägt. Mit der Kennzahl des anderen Auslaufs 17 oder anderer Stationen wird folglich über die so eingestellte Koinzidenzstufe 51 kein Signal abgegeben. In der dargestellten Position der Weiche 50 ist am Ausgang des Inverters 53 der Kontakt des Umschalters 55 geschlossen. Damit wird durch die Kennzahl des Auslaufs 17 vom mobilen Steuermodul 22 die Verzweigungsstation 18c aktiviert und die Weiche 50 wird in die gestrichelte Position umgeschaltet. Der Werkstückträger 14 mit dem Werkstück 11 gelangt nun wieder in die Hauptschleife 10a der Transportstraße 10 und an der Verzweigungsstation 18d wird die Kennzahl 17 des Auslaufs 17 als Zielvorgabe vom mobilen Steuermodul 20 des Werkstückes 11 auf den ortsfesten Steuermodul 21 der Verzweigungsstation 18d übertragen. Da der Koinzidenzschaltung der Verzweigungsstation 18d in der dargestellten Position der Weiche 50 die Kennzahl des Auslaufs 17 aufgeprägt ist, wird diese nunmehr in die gestrichelte Position geschwenkt und der Werkstückträger 14 mit dem Werkstück 11 verläßt über den Auslauf 17 die Fertigungsstraße 10.

In gleicher Weise sucht der Werkstückträger 14 mit dem Werkstück 12 nach dem Ablaufprogramm B auf der Transportstraße 10 seinen Weg. Das Werkstück 12 wird dabei zunächst über die Verzweigungsstation 18a zur Bearbeitungsstation 19b befördert und dort in vorbestimmter Weise bearbeitet. Er gelangt anschließend über die Verzweigungsstation 18b zur Meßstation 20 und wird dort ein erstes Mal vermessen. Anschließend gelangt er über die Hauptschleife 10a der Transportstraße 10 wieder zurück zur Nebenschleife 10b und wird nunmehr von der Bearbeitungsstation 19c bearbeitet, um anschließend nochmals die Meßstation 20 anzufahren. Je nachdem, ob die dort gemessenen Werte nun innerhalb oder außerhalb der zulässigen Toleranzen liegen, wird das Werkstück 12 nunmehr über die Verzweigungsstation 18c auf den Auslauf 17a aussortiert oder über die Verzweigungsstation 18d zum Auslauf 17 gelenkt.

Ein weiteres Ablaufprogramm C soll von der Transporteinheit 15 mit dem Werkstück 13 abgearbeitet werden. Auch dieses Ablaufprogramm wurde zunächst am Einlauf 16 über die Eingabeeinheit 35 in den mobilen Steuermodul 22 des Werkstückträgers 14 mit dem Werkstück 13 geladen. Dem Programm C folgend bewegt sich nun der Werkstückträger 14 mit dem Werkstück 13 zunächst über die Verzweigungsstation 18a in die Nebenschleife 10b und dort zur Bearbeitungsstation 19a. Daran anschließend wird das Werkstück 13 zunächst auch noch von der Bearbeitungsstation 19c bearbeitet und es gelangt dann über die Verzweigungsstation 18b zur Meßstation 20. Aufgrund der dort gemessenen Werte wird nun vom mobilen Steuermodul 22 entschieden, ob das Werkstück 13 mit der erforderlichen Maßgenauigkeit über die Verzweigungsstation 18d in den Auslauf 17 oder bei unzureichender Maßgenauigkeit über die Verzweigungsstation 18c in den Auslauf 17a befördert werden soll.

Durch den Dialog zwischen den ortsfesten Steuermodulen 21 an der Transportstraße 10 und den mobilen Steuermodulen 22 an den Werkstückträgern 14 ist es möglich, jedes Werkstück in einer individuellen Folge den verschiedensten Stationen innerhalb der Transportstraße 10 zuzuführen. Dazu ist nur erforderlich, daß ein entsprechendes Ablaufprogramm erstellt und in dem mobilen Steuermodul 22 des jeweiligen Werkstücks abgelegt wird. Mit Hilfe dieses Ablaufprogramms sucht sich anschließend jede Transporteinheit 15 im Dialog des mobilen Steuermoduls 22 mit den ortsfesten Steuermodulen 21 an der Transportstraße 10 den optimalen Weg selbst.

Zur Erhöhung der Flexibilität des Steuersystems ist es ferner zweckmäßig, eine Prüfstation vorzusehen, an der aus dem mobilen Steuermodul 22 einer Transporteinheit 14 der bereits durchlaufene Teil des Ablaufprogramms abgerufen und der noch nicht durchlaufene Teil zu ergänzen bzw. zu korrigieren ist. In Figur 10 ist eine solche Prüfstation dargestellt. Die Prüfstation 76 ist hier außerhalb der Transportstraße 10 angeordnet und mit einer elektrischen Schreibmaschine 77 als Eingabeeinrichtung ausgerüstet. Sie hat ferner eine Lese- und Eingabeeinheit 78 und eine Unterlage 79 für den Werkstückträger 14 mit dem zu überprüfenden Werkstück 13. Im Beispielsfall ist die Station 19c der Anlage nach Figur 1 ausgefallen und der von dieser Station auszuführende Arbeitsvorgang soll nun von der Station 19b übernommen werden. Um dies bewerkstelligen zu können, wird der Werkstückträger 14 mit dem Werkstück 13 der Transportstraße 10 entnommen und auf die Prüfstation 76 gesetzt. Aus dem mobilen Steuermodul 22 der Transporteinheit 14 wird dort im Dialog mit der Lese- und Eingabeeinheit 78 der bereits durchlaufene Teil des Ablaufprogramms C abgerufen und der noch nicht durchlaufene bzw. erledigte Teil wird mit der Schreibmaschine 77 von Hand korrigiert, indem im Ablaufprogramm C die Kennzahl 19c im Speicher 33 durch die Kennzahl 19b überschrieben wird. Anschließend wird der Werkstückträger 14 mit dem Werkstück 13 an beliebiger Stelle wieder auf die Transportstraße 10 aufgesetzt und sucht sich von dort aus selbst den Weg zur Station 19b.

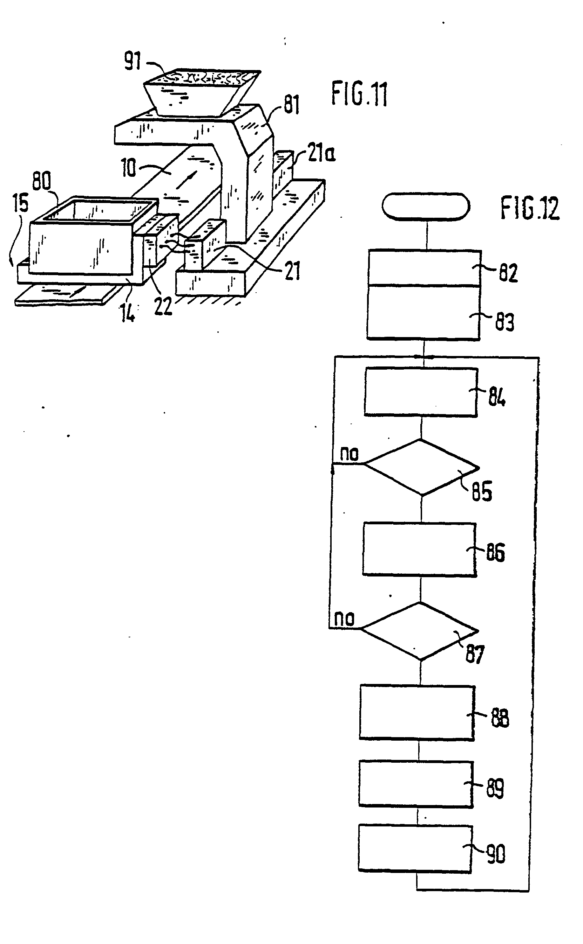

In einem weiteren Ausführungsbeispiel der Erfindung gemäß Figur 11 besteht die Transporteinheit 15 aus einem Werkstückträger 14, auf dem ein Behälter 80 angeordnet ist. In dem Behälter können Materialien oder Stoffe eingefüllt werden, die an verschiedenen Stationen der Transportstraße 10 benötigt werden. Im Beispielsfall ist der Behälter 80 mit einer Anzahl von Schrauben gefüllt, die beispielsweise an der Bearbeitungsstation 19b aus Figur 1 sowie an weiteren dort nicht dargestellten Stationen benötigt werden. In diesem Fall wird über die Eingabeeinheit 35 ein Ablaufprogramm in den mobilen Steuermodul 22 eingegeben, das die verschiedenen mit Schrauben zu versorgenden Stationen enthält, die zyklisch durchlaufen werden sollen. An den entsprechenden Stationen der Transportstraße 10 werden dabei die jeweils benötigten Mengen an Schrauben dem Behälter 80 entnommen. Um den Behälter 80 immer wieder rechtzeitig nachzufüllen, ist es erforderlich, daß neben dem Ablaufprogramm des dem Behälter 80 zugeordneten mobilen Steuermoduls 22 die Art und die Mengenangabe des im Behälter 80 befindlichen Materials bzw. des Stoffs als weitere Daten im Speicher 33 abgelegt werden. Zu diesem Zweck wird im mobilen Steuermodul 22 durch die Quittungsinformation an jeder Entnahmestation ein Unterprogramm aufgerufen, das den Inhalt des Behältes 80 überwacht. Sobald nun die Menge im Behälter 80 einen bestimmten Wert unterschreitet, wird die Transporteinheit 15 mit Hilfe des Unterprogramms im mobilen Steuermodul 22 als nächstes Ziel eine Nachfüllstation 81 ansteuern. Dem ortsfesten Steuermodul 21 der Nachfüllstation 81 wird vom mobilen Steuermodul 22 der Nachfüllbefehl und die benötigte Nachfüllmenge Z übermittelt.

Das dafür im mobilen Steuermodul benötigte Programm ist in Figur 12 dargestellt. Im Schritt 82 muß zunächst der Behälter 80 mit einer bestimmten Anzahl von Schrauben gefüllt werden und im Schritt 83 wird über ein Quittungssignal im mobilen Steuermodul 22 ein Zähler auf die Zahl der nun im Behälter 80 befindlichen Schrauben gesetzt. Im Schritt 84 wird das Ablaufprogramm mit dem zyklisch zu durchlaufenen Endnahmestationen an der Transportstraße 10 (Figur 1) aufgerufen und damit wird die nächste Entnahmestation von der Transporteinheit 15 angesteuert. Danach wird im Schritt 85 mit Hilfe der Quittungsinformation der angesteuerten Entnahmestation geprüft, ob und wieviel Schrauben dem Behälter 80 entnommen worden sind. Wurden keine entnommen, so wird in das Ablaufprogramm zurückgesprungen und die nächste Entnahmestation wird angesteuert. Wurden dagegen Schrauben entnommen, so wird im Schritt 86 der Zähler um die Anzahl z der entnommenen Schrauben heruntergezählt. Im Schritt 87 muß nun geprüft werden, ob ein unterer Grenzwert für die Anzahl der Schrauben im Behälter 80 erreicht bzw. unterschritten ist. Dieser Grenzwert ist ebenfalls im Speicher 33 des mobilen Steuermoduls 22 mit abgelegt. Solange der Grenzwert nicht erreicht ist, wird die nächste Entnahmestation im Ablaufprogramm des mobilen Steuermoduls 22 angesteuert. Wird dagegen der Grenzwert erreicht, bzw. unterschritten, so wird im Schritt 88 als nächstes Ziel die Nachfüllstation 81 aufgerufen und die Transporteinheit 15 bewegt sich nunmehr auf der Transportstraße 10 zur Nachfüllstation 81 gemäß Figur 11. Dort angelangt wird sie mit einer aus dem Zählerstand im mobilen Steuermodul 22 errechneten, im Schritt 89 an den ortsfesten Steuermodul 21 der Nachfüllstation 81 übermittelten Menge Z von Schrauben nachgefüllt, sofern noch ausreichend Schrauben in einem Nachfüllbehälter 91 der Nachfüllstation 81 vorhanden sind. Die nachgefüllte Menge Z wird schließlich über ein Quittungssignal des der Nachfüllstation 81 nachgeordneten ortsfesten Steuermodul 21a dem mobilen Steuermodul 22 der Transporteinheit 15 mitgeteilt und im Schritt 90 wird nun der Zähler im mobilen Steuermodul 22 um die Zahl Z der im Behälter 80 nachgefüllten Schrauben erhöht. Schließlich springt das Programm wieder im Schritt 84 auf das Ablaufprogramm zurück, so daß nach dem Verlassen der Nachfüllstation 81 die Transporteinheit 50 wieder zur nächsten Entnahmestation bewegt wird.

Die Erfindung ist nicht auf die dargestellten Ausführungsbeispiele beschränkt. Als Bearbeitungsstationen mit mehreren Bearbeitungsprogrammen können beispielsweise Werkzeugmaschinen oder Handhabungsautomaten verwendet werden, bei denen mit Hilfe des Ablaufprogramms der jeweiligen Transporteinheiten bestimmte Arbeitsgänge bzw. Arbeitsfolgen aufgerufen werden. Außerdem ist es möglich, Änderungen im Ablaufprogramm auch innerhalb der Transportstraße vorzunehmen, indem entsprechende Eingabeeinheiten bzw. Prüfstationen unmittelbar an der Transportstraße angeordnet werden. In gleicher Weise ist es auch möglich, durch die Quittungsinformationen an verschiedenen Stationen den noch nicht durchlaufenen Teil des im mobilen Steuermodul abgelegten Ablaufprogramms zu ergänzen bzw. zu korrigieren. Bei Ablaufprogrammen, deren einzelne Abschnitte oder Schritte in ihrer Folge zueinander nicht von vornherein festgelegt worden sind, kann z.B. zur Erhöhung der Flexibilität des Steuersystems nach jedem durchlaufenen Schritt bzw. Abschnitt der nächste Programmabschnitt bzw. -schritt durch eine Entscheidungslogik ausgewählt werden, die im mobilen Steuermodul 22 mit enthalten ist. Auf diese Weise kann beispielsweise im Flußdiagramm nach Figur 12 im Schritt 84 von dem mobilen Steuermodul 22 selbst entschieden werden, welche von mehreren Entnahmestationen als nächste angesteuert werden soll.

Die Auslösung eines Arbeitsvorganges an den verschiedenen Stationen der Transportstraße 10 wird nach dem Ausführungsbeispiel aus Figur 1 durch eine entsprechende Information bewirkt, die von dem der Station zugeordneten ortsfesten Steuermodul 21 beim Vorbeilaufen eines mobilen Steuermoduls 22 empfangen wird. Durch die Koinzidenzprüfung wird gewährleistet, daß ein Arbeitsvorgang nur dann ausgelöst wird, wenn die jeweilige Station den im Ablaufprogramm der Transporteinheit 15 vorgesehenen Schritt durchführen kann. Im Rahmen der Erfindung ist es aber auch möglich, durch die vom mobilen Steuermodul 22 übermittelte Information einen Arbeitsvorgang an der jeweiligen Station zu verhindern. Dies wäre dann sinnvoll, wenn in einer sogenannten Mischfertigung im Normalfall an bestimmten Stationen regelmäßig ein bestimmter Arbeitsvorgang durchgeführt wird, der jedoch bei einem bestimmten Werkstück nicht durchgeführt werden soll.

Da durch die Quittungssignale an den verschiedenen Sationen die Transportabläufe sowie die Meßergebnisse und sonstige Daten im mobilen Steuermodul 22 abgespeichert werden, können sie bis zur Löschung und Abspeicherung eines neuen Ablaufprogramms auszugsweise oder vollständig an den Prüfstationen abgerufen und ausgewertet oder auf andere Speicher gegeben werden. Der Dialog bzw. die Übertragung der Informationen zwischen den ortsfesten und den mobilen Steuermodulen 21, 22 kann mit allen bekannten physikalischen Methoden erfolgen, wobei eine berührungslose Übertragung, z.B. eine elektromagnetische, optische oder magnetische Übertragung den Vorzug zu geben ist. Auch die Speicherung der Daten wird abhängig vom Informationsumfang magnetisch oder elektrisch vorgenommen. Die ortsfesten und mobilen Steuermodule sind dabei so aufgebaut, daß sie selbst bei einer Transportgeschwindigkeit von 0,3 m/s der Transporteinheiten durch eine hochfrequente Informationsübertragung noch in einen Dialog miteinander treten können. Über eine Schnittstelle können die ortsfesten Steuermodule 21 auch an einen normalen Drucker oder an einen Rechner angeschlossen werden. Durch einen einheitlichen Aufbau der ortsfesten Steuermodule 21 und 21a ist es möglich, diese sowohl unmittelbar zur Steuerung der Weichen an den Verzweigungsstationen, zur Steuerung der Arbeitsgänge an den Bearbeitungsstationen als auch zur Übertragung der Quittungsinformationen zu verwenden. In den mobilen Steuermodulen 22 werden als überschreibbare Speicher 33 bevorzugt EEPROMs verwendet, deren Informationsinhalt auch dann erhalten bleibt, wenn keine Energie von außen dem mobilen Steuermodul 22 zugeführt wird. Die Speicherdauer der Informationen liegt hier im Bereich von Jahren und der Bereich von Umgebungstemperatur liegt zwischen 0 und + 40°C. Durch eine metallische Abschirmung werden die Steuermodule weitgehend gegen Störimpulse bzw. gegen magnetische Einstreuungen geschützt. Der überschreibbare Speicher kann auch mit EPROMs aufgebaut werden. Der Speicher wird dann ständig mit Strom aus einer Batterie (z.B. Lithiumzelle) versorgt.

Das erfindungsgemäße Steuersystem ist nicht nur für Transportstraßen zur Herstellung von Produkten, zum Montieren oder Verpacken von Erzeugnissen, zum Anliefern von Teilen, Materialien oder Stoffen verwendbar sondern es läßt sich allgemein für alle Transporteinheiten verwenden, die sich auf Transportstraßen zu Lande oder zu Wasser bewegen und ein gewisses Ablaufprogramm bewältigen sollen.

**Patentansprüche**

1. Steuersystem für mobile Transporteinheiten (14) mit an den Transporteinheiten (14) befestigten mobilen Steuermodulen (22) auf einer Transportstraße mit mehreren ortsfesten Stationen (18, 19, 20) welche von den Transporteinheiten (14) zumindest teilweise nacheinander durchlaufen werden, wobei an der Transportstraße (10) mehrere, den Stationen (18, 19, 20) zugeordnete ortsfeste Steuermodule (21) angeordnet sind, die jeweils beim Vorbeilaufen der Transporteinheit (14) Informationen vom mobilen Steuermodul (22) der Transporteinheit (14) empfangen und in Abhängigkeit von diesen übermittelten Informationen an den ihnen zugeordneten Stationen einen Arbeitsvorgang auslösen oder verhindern und Daten an den mobilen Steuermodul (22) abgeben, mit wenigstens einer an am Eingang der Transportstraße (10) angeordneten Eingabeeinheit (35), die ein Ablaufprogramm im mobilen Steuermodul (22) einer jeden Transporteinheit (24) hinterlegt, dadurch gekennzeichnet, daß

a) die Informationsübertragung von den ortsfesten Stationen (18, 19, 20) zum mobilen Steuermodul (22) und vom mobilen Steuermodul (22) zu den ortsfesten Stationen (18, 19, 20) berührungslos stattfindet,

b) in jedem mobilen Steuermodul (22) ein von der ihm zugeordneten Transporteinheit (14) in Schritten gegliedertes, von der Transporteinheit (14) zu durchlaufendes Ablaufprogramm (A, B, C) im Speicher abgelegt ist, das in Abhängigkeit von dem von den ortsfesten Stationen (18, 19, 20) in den mobilen Steuermodul (22) übertragenen Informationen den Weg der mobilen Transporteinheit (14) durch die Transportstraße (10) festlegt,

c) die am Eingang der Transportstraße (10) angeordnete Eingabeeinheit (35) das Ablaufprogramm (A, B, C) im mobilen Steuermodul (22) berührungslos hinterlegt und

d) das Ablaufprogramm (A, B, C) jederzeit änderbar ist.

2. Steuersystem nach Anspruch 1, dadurch gekennzeichnet, daß an der von der Transporteinheit (14) angelaufenen Station (18, 19, 20) nur dann ein Arbeitsvorgang ausgelöst bzw. verhindert wird, wenn die vom mobilen Steuermodul (22) der Transporteinheit (14) abgegebene Information mit einer der Station (18, 19, 20) aufgeprägten Festinformation für einen Arbeitsvorgang übereinstimmt.

3. Steuersystem nach Anspruch 2, dadurch gekennzeichnet, daß die Transporteinheit (14) eine Station ohne Auslösung bzw. ohne Verhinderung eines Arbeitsvorganges durchläuft, wenn die vom mobilen Steuermodul (22) abgegebene Information mit der aufgeprägten Festinformation der Station (18, 19, 20) nicht übereinstimmt.

4. Steuersystem nach einem der vorherigen Ansprüche, dadurch gekennzeichnet, daß die Stationen nach dem Abschluß eines Arbeitsvorganges eine Quittungsinformation über einen ihr zugeordneten ortsfesten Steuermodul (21a) an den mobilen Steuermodul (22) der an der Station befindlichen Transporteinheit (14) übertragen, welche im mobilen Steuermodul (22) das Ablaufprogramm (A, B, C) zum Aufruf der nächsten Station um einen Schritt weiterschaltet.

5. Steuersystem nach einem der Ansprüche 1 bis 4, dadurch gekennzeichnet, daß die am Eingang (16) der Transportstraße (10) angeordnete ortsfeste Eingabeeinheit (35) zur Eingabe einer Kennung im mobilen Steuermodul (22) einer jeden Transporteinheit (15) vorgesehen ist.

6. Steuersystem nach Anspruch 5, dadurch gekennzeichnet, daß die Stationen Verzweigungsstationen (18), Bearbeitungsstationen (19) und/oder Meßstationen (20) sind und daß die Transporteinheiten (15) aus Werkstückträgern (14) mit einem Werkstück (11, 12, 13) bzw. Behälter (80) bestehen, die sich auf der Transportstraße (10) in einer vorgegebenen Richtung von Station zu Station bewegen.

7. Steuersystem nach Anspruch 5, dadurch gekennzeichnet, daß die Kennung (38) bestimmte Daten des Werkstücks (11, 12, 13) bzw. des Behälters (80) und/oder eine Kennzahl des Werkstückträgers (14) enthält und daß das Ablaufprogramm (A, B, C) Informationen über die Bearbeitungsfolge und die bei den einzelnen Arbeitsvorgängen zu erzielenden Sollwerte enthält.

8. Steuersystem nach Anspruch 6, dadurch gekennzeichnet, daß der mobile Steuermodul (22) der Transporteinheiten (14) beim Anfahren von verschiedene Bearbeitungsprogramme durchführende Bearbeitungsstationen (19) neben einer Information zur Auslösung von Arbeitsvorgängen noch eine Zusatzinformation (38) zur Auslösung eines bestimmten Bearbeitungsprogrammes an den ortsfesten Steuermodul (21) der Bearbeitungsstation (19) übermittelt.

9. Steuersystem nach Anspruch 8, dadurch gekennzeichnet, daß die Zusatzinformationen (38) zusammen mit dem Ablaufprogramm (A, B, C) in einen Speicher (33) des mobilen Steuermoduls (22) eingegeben und dort bestimmten Schritten des Ablaufprogramms zugeordnet werden, welche die entsprechenden Bearbeitungsstationen (19) ansprechen.

10. Steuersystem nach einem der vorherigen Ansprüche dadurch gekennzeichnet, daß an den Stationen (18, 19, 20) die vom mobilen Steuermodul (22) der Transporteinheiten (15) abgegebenen Informationen auf eine Koinzidenzschaltung mit mindestens einer Koinzidenzstufe (51) gelangen, welche die aufgeprägte Festinformation der jeweils angesprochenen Station (18, 19, 20) enthält und die bei Übereinstimmung der Festinformation mit der vom mobilen Steuermodul (22) ausgegebenen Information einen Arbeitsbefehl an die Station abgibt.

11. Steuersystem nach Anspruch 10, dadurch gekennzeichnet, daß die Koinzidenzschaltung in dem der Station (18, 19, 20) zugeordneten ortsfesten Steuermodul (21) mit enthalten ist, über dessen Ausgang die Arbeitsbefehle unmittelbar an die Station (18, 19, 20) gegeben werden.

12. Steuersystem nach Anspruch 10, dadurch gekennzeichnet, daß die Festinformationen über Schalter (26a) von Hand in die Koinzidenzschaltung eingegeben werden.

13. Steuersystem nach Anspruch 4, dadurch gekennzeichnet, daß die Quittungsinformationen Daten über die jeweils durchlaufene Station (18, 19, 20) enthalten, die in der Schrittfolge des durchlaufenen Ablaufprogramms (A, B, C) im mobilen Steuermodul (22) abrufbar gespeichert werden.

14. Steuersystem nach Anspruch 13, dadurch gekennzeichnet, daß die Quittungsinformationen Meßwerte (X) des entsprechenden Werkstücks (11, 12, 13) enthalten, durch die der noch nicht durchlaufene Teil des Ablaufprogramms (A, B, C) im mobilen Steuermodul (22) abzuändern ist.

15. Steuersystem nach einem der vorherigen Ansprüche, dadurch gekennzeichnet, daß im mobilen Steuermodul (22) eine Logikschaltung (32) die gespeicherten, die eingehenden und die abzugebenden Informationen verarbeitet.

16. Steuersystem nach Anspruch 4, dadurch gekennzeichnet, daß eine im mobilen Steuermodul (22) enthaltene Logikschaltung (32) bei mehreren, in ihrer Folge nicht vorbestimmten Schritten des Ablaufprogramms (A, B, C) den jeweils nächsten Schritt selbständig ermittelt.

17. Steuersystem nach Anspruch 13, dadurch gekennzeichnet, daß eine Prüfstation (76) vorgesehen ist, die aus dem mobilen Steuermodul (22) einer Transporteinheit (14) den bereits durchlaufenen Teil des Ablaufprogramms (A, B, C) ausschließt und daß der Prüfstation (76) eine Eingabevorrichtung (72) zum Ändern des noch nicht durchlaufenen Teils des Ablaufprogramms (A, B, C) zugeordnet ist.

18. Steuersystem nach Anspruch 17, dadurch gekennzeichnet, daß die Prüfstation (76) mit der Eingabeeinrichtung (77) außerhalb der Transportstraße (10) angeordnet ist.

19. Steuersystem nach Anspruch 5, dadurch gekennzeichnet, daß ein Programmwähler (37) aus verschiedenen Ablaufprogrammen (A, B, C) mit Hilfe einer von außen eingegebenen Kode-Information ein Ablaufprogramm auswählt und über die Eingabeeinheit (35) in den mobilen Steuermodul (22) der betreffenden Transporteinheit (15) eingibt.

20. Steuersystem nach Anspruch 19, dadurch gekennzeichnet, daß die Kode-Information an der Transporteinheit (15) angebracht ist, die an einer ortsfesten Lesestelle (36) abgefühlt und an dem Programmwähler (37) weitergegeben wird.

21. Steuersystem nach einem der Ansprüche 1 bis 7, dadurch gekennzeichnet, daß die Transporteinheiten (15) einen Material bzw. Stoffe aufnehmenden Behälter (80) haben, denen an mehreren Stationen (19) der Transportstraße (10) Teilmengen entnommen werden und daß neben dem Ablaufprogramm des dem Behälter (80) zugeordneten mobilen Steuermoduls (22) Art und Mengenangabe des im Behälter (80) befindlichen Materials bzw. Stoffes als weitere Daten gespeichert sind.

22. Steuersystem nach Anspruch 21 dadurch gekennzeichnet daß der mobile Steuermodul (22) über die Quittungsinformationen Angaben über die an einer Station (19) dem Behälter (80) entnommenen bzw. zugeführten Teilmenge (z, Z) erhält und daraus die im Behälter (80) befindliche Restmenge bzw. Gesamtmenge ermittelt.

23. Steuersystem nach Anspruch 22, dadurch gekennzeichnet, daß im Ablaufprogramm des mobilen Steuermoduls (22) die Angabe einer Mindestmenge im Behälter (80) enthalten ist und daß beim Unterschreiten der Mindestmenge als nächster Schritt des Ablaufprogramms das Aufsuchen einer Nachfüllstation (91) aufgerufen und nach dem Verlassen der Nachfüllstation (91) wieder das weitere Ablaufprogramm durchlaufen wird.

24. Steuersystem nach einem der vorhergehenden Ansprüche, dadurch gekennzeichnet, daß die Energieversorgung des mobilen Steuermoduls (22) berührungslos an den ortsfesten Stationen (18, 19, 20) erfolgt.

**Revendications**

1. Système de commande pour des unités mobiles (14) de transport, avec des modules mobiles de transport (22) fixés sur ces unités de transport (14), sur une piste de transport avec plusieurs stations fixes (18, 19, 20) qui sont au moins partiellement desservies l'une après l'autre par les unités de transport (14), tandis que contre la piste de transport (10) sont disposés plusieurs modules de commande fixes (21), associés aux stations (18, 19, 20) et qui, chaque fois qu'une unité de transport (14) passe devant eux, reçoivent du module mobile (22) de cette unité de transport (14) des informations, et en fonction des informations ainsi transmises déclenchent ou empêchent aux stations qui leur sont associées, un processus opérationnel et délivrent des données aux modules mobiles de commande (22), le système comportant une unité d'entrée (35) disposée à l'entrée de la piste de transport (10) et qui dépose un programme opérationnel dans le module mobile de commande (22) de chaque unité de transport (14), système de commande caractérisé en ce que:

a) la transmission d'informations par les stations fixes (18, 19, 20) au module mobile de commande (22) et par le module mobile de commande (22) aux stations fixes (18, 19, 20) a lieu sans contact,

b) dans chaque module mobile de commande est mis en mémoire un programme séquentiel (A, B, C), articulé en étapes et devant être exécuté par l'unité de transport (14) associée à ce module, ce programme déterminant, en fonction d'informations transmises au module mobile de commande (22) à partir des stations fixes (18, 19, 20), le parcours de l'unité mobile de transport (14) le long de la piste de transport (10),

c) l'unité d'entrée (35) disposée à l'entrée de la piste de transport (10) dépose le programme séquentiel (A, B, C) dans le module mobile de commande (22) sans contact avec celui-ci,

d) le programme séquentiel (A, B, C) est susceptible d'être modifié à tout moment.

2. Système de commande selon la revendication 1, caractérisé en ce que, à la station (18, 19, 20) abordée par l'unité de transport (14), un processus opérationnel n'est déclenché ou empêché que lorsque l'information délivrée par le module mobile de commande (22) de l'unité de transport (14) coïncide avec une information fixe pour un processus opérationnel, empreinte dans une des stations (18, 19, 20).

3. Système de commande selon la revendication 2, caractérisé en ce que l'unité de transport (14) traverse une station sans qu'il y ait déclenchement ou empêchement d'un processus opérationnel, lorsque l'information délivrée par le module mobile de commande (22) ne coïncide pas avec l'information fixe empreinte dans la station (18, 19, 20).

4. Système de commande selon une des précédentes revendications, caractérisé en ce que les stations, après l'achèvement d'un processus opérationnel, transmettent au module mobile de commande (22) de l'unité de transport (14) se trouvant à la station, par l'intermédiaire d'un module fixe de commande (21a) associé à cette station, une information d'accusé de réception, qui commute d'une étape dans ce module mobile de commande (22) le programme séquentiel (A, B, C) pour appeler la station immédiatement suivante.

5. Système de commande selon une des revendications 1 à 4, caractérisé en ce que l'unité fixe d'entrée (35) disposée à l'entrée (16) de la piste de transport (10) est prévue pour introduire une identification caractéristique dans le module mobile de commande (22) de chaque unité de transport (14).

6. Système de commande selon la revendication 5, caractérisé en ce que les stations sont des stations de bifurcation (18), des stations de traitement (19) et/ou des stations de mesure (20), et que les unités de transport (15) sont constituées par des supports de pièce d'oeuvre (14) avec une pièce d'oeuvre (11, 12, 13) ou bien par des récipients (80), qui se déplacent de station en station sur la piste de transport (10) dans un sens prédéfini.

7. Système de commande selon la revendication 5, caractérisé en ce que l'identification caractéristique (38) comprend certaines données de la pièce d'oeuvre (11, 12, 13) ou du récipient (80) et/ou un nombre caractéristique du support de pièce d'oeuvre (14), tandis que le programme séquentiel comprend des informations sur la séquence de traitement et sur les valeurs de consigne à obtenir lors des différents processus opérationnels.

8. Système de commande selon la revendication 6, caractérisé en ce que le module mobile de commande (22) des unités de transport (14), lors de l'abordage de stations de traitement (19) mettant en oeuvre des programmes de traitement différents, transmet en outre au module fixe de commande (21) de la station de traitement (19), à côté d'une information pour le déclenchement de processus de traitement, une information supplémentaire (38) pour le déclenchement d'un programme de traitement déterminé.

9. Système de commande selon la revendication 8, caractérisé en ce que les informations supplémentaires (38), conjointement avec le programme séquentiel (A, B, C), sont introduites dans une mémoire (33) du module mobile de commande (22) et y sont associées à des étapes déterminées du programme séquentiel, qui s'adressent aux stations de traitement (19) correspondantes.

10. Système de commande selon une des précédentes revendications, caractérisé en ce qu'aux stations (18, 19, 20), les informations délivrées par le module mobile de commande (22) des unités de transport (15) arrivent sur un circuit de coïncidence comportant au moins un étage de coïncidence (51), qui contient l'information fixe empreinte dans la station respectivement concernée (18, 19, 20) et qui, en cas de coïncidence de cette information fixe avec l'information en provenance du module mobile de commande (22), délivre à la station un ordre opérationnel.

11. Système de commande selon la revendication 10, caractérisé en ce que le circuit de coïncidence est également contenu dans le module fixe de commande (21) associé à la station (18, 19, 20), les ordres opérationnels étant directement donnés à la station (18, 19, 20) par la sortie de ce module.

12. Système de commande selon la revendication 10, caractérisé en ce que les informations fixes sont introduites manuellement dans le circuit de coïncidence par l'intermédiaire de commutateurs (26a).

13. Système de commande selon la revendication 4, caractérisé en ce que les informations d'accusé de réception contiennent des données sur la station (18, 19, 20) respectivement traversée, ces données étant mémorisées et susceptibles d'être appelees dans le module mobile de commande (22) au cours de la succession des étapes du programme séquentiel (A, B, C) suivi.

14. Système de commande selon la revendication 13, caractérisé en ce que les informations d'accusé de réception contiennent des valeurs de mesure (X) de la pièce d'oeuvre correspondante (11, 12, 13) grâce auxquelles la partie non encore parcourue du programme séquentiel (A, B, C) dans le module mobile de commande (33) pour être modifiée.

15. Système de commande selon une des précédentes revendications, caractérisé en ce que, dans le module mobile de commande (22), un circuit logique (32) traits les informations mémorisées, les informations entrantes et les informations à délivrer.

16. Système de commande selon la revendication 4, caractérisé en ce que, dans le cas de plusieurs étapes, dont la succession n'est pas déterminée au préalable, du programme séquentiel (A, B, C), un circuit logique (32), contenu dans le module mobile de commande (22), déterminé automatiquement l'étape respective immédiatement suivante.

17. Système de commande selon la revendication 13, caractérisé en ce qu'il est prévu une station de contrôle (76), qui, à partir du module mobile de commande (22) d'une unité de transport (14), exclut la partie déjà parcourue du programme séquentiel (A, B, C), et en ce que, à cette station de contrôle (76), est associé un dispositif d'entrée (72) pour modifier la partie non encore parcourue du programme séquentiel (A, B, C).

18. Système de commande selon la revendication 17, caractérisé en ce que la station de contrôle (76) avec le dispositif d'entrée (77) est disposée en dehors de la piste de transport (10).

19. Système de transport selon la revendication 5, caractérisé en ce qu'un sélecteur de programmes (37) sélectionne, à l'aide d'une information codée introduite de l'extérieur, un programme séquentiel à partir de différents programmes séquentiels (A, B, C) et l'introduit, par l'intermédiaire de l'unité d'entrée (35), dans le module mobile de commande (22) de l'unité de transport (15) concernée.

20. Système de commande selon la revendication 19, caractérisé en ce que l'information codée est appliquée à l'unité de transport (15) qui est détectée à un emplacement fixe de lecture (36), et cette information est retransmise au sélecteur de programmes (37).

21. Système de commande selon une des revendications 1 à 7, caractérisé en ce que les unités de transport (15) comportent un récipient (80) recevant des matériaux ou des substances dont des quantités partielles sont prélevées en plusieurs stations (19) de la piste de transport (10), et qu'à côté du programme séquentiel du module mobile de commande (22) associé au récipient (80), une indication du type et une indication de la quantité du matériau ou de la substance se trouvant dans le récipient (80) sont mémorisées en tant que données complémentaires.

22. Système de commande selon la revendication 21, caractérisé en ce que le module mobile de commande (22) reçoit, par l'intermédiaire des informations d'accusé de réception, des indications sur les quantités partielles (z, Z) prélevées ou amenées au récipient (80) dans une station (19), et détermine à partir de là la quantité résiduelle ou la quantité totale se trouvant dans le récipient (80).

23. Système de commande selon la revendication 22, caractérisé en ce que l'indication d'une quantité minimale dans le récipient (80) est contenue dans le programme séquentiel du module mobile de commande (22), et dans le cas où cette quantité minimale n'est pas atteinte, la recherche d'une station de remplissage complémentaire (91) est appelée en tant qu'étape immédiatement suivante du programme séquentiel, et après que cette station de remplissage complémentaire (91) ait été quittée, la suite du programme séquentiel est alors parcourue.

24. Système de commande selon une des précédentes revendications, caractérisé en ce que l'alimentation en énergie du module mobile de commande (22) s'effectue, sans contact, aux stations fixes (18, 19, 20).

**Claims**

1. Control system for mobile transport units (14), with mobile control modules (22) attached to the transport units (14) on a transport track having a plurality of stationary stations (18, 19, 20) which are successively passed at least partially by the transport units (14), there being arranged on the transport track (10) a plurality of stationary control modules (21) which are associated with the stations (18, 19, 20), which receive information from the mobile control module (22) of the transport unit (14) in each case when the transport unit (14) passes by and which, depending on this information transmitted, trigger or prevent a work operation at their associated stations, and output data to the mobile control module (22), and with at least one input unit (35) arranged at the entrance to the transport track (10) which stores a process program in the mobile control module (22) of each transport unit (14), characterized in that

a) the transmission of information from the stationary stations (18, 19, 20) to the mobile control module (22) and from the mobile control module (22) to the stationary stations (18, 19, 20) is effected without contact,

b) there is stored in the memory in each mobile control module (22) a process program (A, B, C) divided into steps by its associated transport unit (14) (sic) and to be executed by the transport unit (14), which process program defines the route of the mobile transport unit (14) through the transport track (10) depending on the information transmitted from the stationary stations (18, 19, 20) into the mobile control module (22),

c) the input unit (35) arranged at the entrance of the transport track (10) stores the process program (A, B, C) in the mobile control module (22) without contact, and

d) the process program (A, B, C) can be altered at any time.

2. Control system according to Claim 1, characterized in that a work operation is triggered or prevented at the station (18, 19, 20) at which the transport unit (14) arrives only if the information output by the mobile control module (22) of the transport unit (14) matches the fixed information for a work operation programmed into the station (18, 19, 20).

3. Control system according to Claim 2, characterized in that the transport unit (14) passes a station without triggering or without preventing a work operation if the information output by the mobile control module (22) does not match the programmed fixed information of the station (18, 19, 20).

4. Control system according to one of the preceding claims, characterized in that, after the completion of a work operation, via a stationary control module (21a) associated with them, the stations transmit to the mobile control module (22) of the transport unit (14) located at the station acknowledgement information which steps on the process program (A, B, C) in the mobile control module (22) by one step to call up the next station.

5. Control system according to one of Claims 1 to 4, characterized in that the stationary input unit (35) arranged at the entrance (16) of the transport track (10) is provided for entering an identifier in the mobile control module (22) of each transport unit (15).

6. Control system according to Claim 5, characterized in that the stations are branching stations (18), machining stations (19) and/or measuring stations (20), and in that the transport units (15) comprise workpiece carriers (14) with a workpiece (11, 12, 13) or container (80) which move on the transport track (10) from station to station in a predetermined direction.

7. Control system according to Claim 5, characterized in that the identifier (38) contains particular data of the workpiece (11, 12, 13) or of the container (80) and/or a code number of the workpiece carrier (14), and in that the process program (A, B, C) contains information on the machining sequence and the setpoint values to be achieved during the individual work operations.

8. Control system according to Claim 6, characterized in that, when it approaches machining stations (19) executing various machining programs, the mobile control module (22) of the transport units (14) transmits to the stationary control module (21) of the machining station (19), besides information for triggering work processes, also additional information (38) for triggering a particular machining program.

9. Control system according to Claim 8, characterized in that the additional information (38) is entered together with the process program (A, B, C) into a memory (33) of the mobile control module (22), and is assigned there to particular steps of the process program which activate the corresponding machining stations (19).

10. Control system according to one of the preceding claims, characterized in that, at the stations (18, 19, 20), the information output by the mobile control module (22) of the transport units (15) reaches a coincidence circuit with at least one coincidence stage (51), which contains the programmed fixed information of the station (18, 19, 20) addressed in each case, and when the fixed information matches the information output by the mobile control module (22) outputs a work instruction to the station.

11. Control system according to Claim 10, characterized in that the coincidence circuit is also contained in the stationary control module (21) associated with the station (18, 19, 20), via the output of which the work instructions are sent directly to the station (18, 19, 20).

12. Control system according to Claim 10, characterized in that the fixed information is input manually into the coincidence circuit via switches (26a).

13. Control system according to Claim 4, characterized in that the acknowledgement information contains data on the station (18, 19, 20) passed in each case, which is stored, in a manner permitting calling up, in the step sequence of the executed process program (A, B, C) in the mobile control module (22).

14. Control system according to Claim 13, characterized in that the acknowledgement information contains measured values (X) of the corresponding workpiece (ll, 12, 13), on the basis of which the as yet unexecuted part of the process program (A, B, C) in the mobile control module (22) is to be altered.

15. Control system according to one of the preceding claims, characterized in that, in the mobile control module (22), a logic circuit (32) processes the stored, the incoming and the outgoing information.

16. Control system according to Claim 4, characterized in that a logic circuit (32) contained in the mobile control module (22) automatically determines the respective next step in the case of a plurality of steps of the process program (A, B, C) whose order is not predetermined.

17. Control system according to Claim 13, characterized in that a test station (76) is provided which excludes (sic) the already executed part of the process program (A, B, C) from the mobile control module (22) of a transport unit (14), and in that the test station (76) is assigned an input device (72) for altering the as yet unexecuted part of the process program (A, B, C).

18. Control system according to Claim 17, characterized in that the test station (76) with the input device (77) is arranged outside the transport track (10).

19. Control system according to Claim 5, characterized in that, with the aid of code information input from outside, a program selector (37) selects a process program from several process programs (A, B, C), and inputs it via the input unit (35) into the mobile control module (22) of the respective transport unit (15).

20. Control system according to Claim 19, characterized in that the code information is attached to the transport unit (15), which is sensed at a stationary reading point (36) and forwarded to the program selector (37).

21. Control system according to one of Claims 1 to 7, characterized in that the transport units (15) have containers (80) accommodating a material or substances, from which part quantities are removed at a plurality of stations (19) of the transport track (10), and in that besides the process program of the mobile control module (22) associated with the container (80), type and quantity specification of the material or substance located in the container (80) are stored as further data.

22. Control system according to Claim 21, characterized in that the mobile control module (22) receives via the acknowledgement information details of the part quantity (z, Z) removed from or added to the container (80) at a station (19), and determines therefrom the residual quantity or total quantity located in the container (80).

23. Control system according to Claim 22, characterized in that the specification of a minimum quantity in the container (80) is contained in the process program of the mobile control module (22), and in that, when the value falls below the minimum quantity, the location of a replenishing station (91) is called up as next step of the process program, and after leaving the replenishing station (91), the further process program is continued again.

24. Control system according to one of the preceding claims, characterized in that the energy supply of the mobile control module (22) is effected without contact at the stationary stations (18, 19, 20).

FIG.1

FIG.2

EP 0 258 227 B1

FIG.4

FIG.3

FIG.5

FIG.6

FIG.7

3

FIG.8

FIG.9

FIG.10

FIG.11

FIG.12